# EUROPÄISCHE PATENTANMELDUNG

(11) **EP 0 887 049 A1**
(43) Veröffentlichungstag der Anmeldung: **30.12.1998**
(21) Anmeldenummer: 98111177.6
(22) Anmeldetag: 18.06.1998
(51) Int. Cl.: A61C 1/00, A61C 13/265

(54) **Konstruktionselemente zur trennbaren Verbindung von künstlichem Zahnersatz mit einem Restzahnbestand**

(30) Priorität: 23.06.1997 CH 1518/97
(71) Anmelder: Unor AG (Unor SA) (Unor Ltd), 8952 Schlieren (CH)
(72) Erfinder: Püntener, Erhard, 8122 Binz (CH)
(74) Vertreter: Coutts, William Robert

(57) **Zusammenfassung**

Ein Konstruktionselement einer Zahnprothese besteht aus Patrize und Matrize, die aus keramischem Material hergestellt oder beschichtet sind.

## Beschreibung

Die vorliegende Erfindung bezieht sich auf Konstruktionselemente (Geschiebe, Gelenke, Scharniergelenke etc.) bestehend aus einem an einem Restzahnbestand zu befestigenden Teil und einem dazugehörenden anderen Teil, welches in einer abnehmbaren Prothese befestigt wird.

In der Zahnmedizin gibt es eine grosse Anzahl von Konstruktionselemente. Bei den sogenannten Geschieben, Gelenken oder Scharnieren unterscheidet man zwischen intrakoronalen und extrakoronalen Ausführungen. Der Unterschied liegt im unterschiedlich beanspruchten Platzbedarf im Restzahnbestand und in den unterschiedlichen Bewegungsmöglichkeiten der Konstruktionselemente.

In der Regel wird eine Matrize aus Metall (intrakoronales Geschiebe, Gelenke etc.) oder eine Patrize aus Metall (extrakoronales Geschiebe, Gelenk etc.) in eine künstliche Zahnkrone (Restzahnbestand) eingearbeitet. Diese künstliche Zahnkrone besteht zu diesem Zweck aus einem Gerüst aus Metall welches aus ästhetischen Gründen mit einem Keramikmaterial verblendet wird. Die Konstruktionselemente sind meist aus Metall oder Kunststoff gefertigt und werden in das metallene Gerüst eingegossen, angelötet oder mitgegossen. Die Zahnkrone wird im Munde einzementiert und dient zusammen mit einem Konstruktionselement als Halt einer herausnehmbaren Prothese.

Der Kostendruck im Gesundheitswesen, neue Möglichkeiten bei den Keramikmaterialien und die Nachtrage nach einer besseren Aesthetik führten in jüngster Zeit vermehrt dazu, dass immer mehr Zahnersatz aus Keramik hergestellt und dabei auf ein Metallgerüst verzichtet wird. Der Nachteil bei diesen Arbeiten besteht darin, dass keine Verbindungselemente mitverarbeitet werden können. Dadurch sind diese keramischen Systeme praktisch nur für einzelne Zahnrekonstruktionen oder kleine Brücken zu gebrauchen und kombinierte Arbeiten mit abnehmbaren Prothesen können nicht realisiert werden.

Die Erfindung besteht in der Verwendung von zahnfarbenem keramischen Material als Herstellungsmaterial für Konstruktionselemente, oder als Ummantelung von Konstruktionselementen aus Metall gemäss kennzeichnendem Teil des Anspruches 1. Zusätzlich oder als Alternative können einzelne Teile mit Kunststoffbeschichtet werden.

Damit können zahntechnische Arbeiten aus Keramik mit Konstruktionselemente versehen werden und eine Prothese daran angehängt werden. Die Indikation des bisher hergestellten Zahnersatzes aus Keramik wird dadurch stark erweitert.

Als weiterer entscheidender Vorteil dieser Erfindung, schimmert das zahnfarbene keramische Material nicht gräulich oder gelblich durch einen Prothesenkunststoff durch wie bei den bis jetzt verwendeten Metallen. Dadurch kann eine Prothese graziler und ästhetisch ansprechender gestaltet werden. Durch kuntstoffbeschichtete Konstruktionselemente wird die Gleitfähigkeit von zwei Teilen erhöht resp. verbessert. Ein zusätzlicher Vorteil der Erfindung ist der sanfte Gleitsitz zwischen zwei Konstruktionselementen, die durch eine ein- oder beidseitige Kunststoffbeschichtung Bar eine ähnlich vorzügliche Friktion der Teile aufweist, wie bei der Verwendung von mehreren Teilen aus Kunststoff und Metall, jedoch weit weniger Platz in Anspruch nimmt. Zudem lässt ein kunststoffbeschichtetes Teil eine gewünschte mikromechanische Bewegung eines Prothesenteiles zu. Eine komplett starre und somit ev. für das Parodont schädliche Verbindung wird damit ausgeschaltet.

In einer besonderen Ausführungsform der Erfindung, ist die Patrize am Restzahnbestand in einer Halterung befestigt. Zuerst wird die Halterung in den Restzahnbestand eingebracht, dann die Patrize in die Halterung. Der Vorteil liegt darin, dass in einer keramischen, oder keramisch beschichteten Halterung die bisherigen Patrizen eingeklebt werden können.

In einer besonderen Ausführungsform der Erfindung sind alle Elemente der Konstruktion mit keramischem Material beschichtet. Wenn die Patrize in einer Halterung befestigt ist, besteht die Konstruktion aus drei Elementen, d.h. Halterung, Matrize und Patrize. Einige dieser Elemente können aus keramischem Material hergestellt werden, wie z.B. die Halterung und die Matrize und die anderen nur mit keramischem Material beschichtet werden.

Wenn die Konstruktion nur aus zwei Elementen besteht, d.h. Patrize und Matrize, kann z.B. die Patrize nur mit Material beschichtet werden, oder umgekehrt. Beide Elemente können auch aus keramischem Material hergestellt werden, oder nur mit keramischem Material beschichtet werden.

Die Entscheidung, ob die eine oder die andere Version benützt wird, liegt in deren mechanischen Eigenschaften und in den anderen unterschiedlichen Materialien, die für die Konstruktion verwendet werden müssen.

In einer besonderen Ausführungsform der Erfindung sind die Elemente der Konstruktion aus zahnfarbenem Material hergestellt. Diese Ausführungsform hat den schon erwähnten Vorteil, eine metallgräuliche Durchschimmerung zu vermeiden. Diese Form ist speziell geeignet, wenn die o.g. mechanischen Eigenschaften nicht zu streng sind, was mehr Wahl in den anderen Materialeigenschaften lässt, z.B. die Farben dieser Materialien.

In einer besonderen Ausführungsform der Erfindung, wo die Elemente der Konstruktion aus zahnfarbenem keramischem Material hergestellt sind, ist dieses Material in Schichten hergestellt. Obwohl das keramische Material durchgehend fast dieselbe Struktur hat, kann auf die so gefertigten Teile eine Schicht aufgebracht werden, die eine etwas andere Struktur und eine andere Eigenschaft aufweist.

In einer besonderen Ausführungsform der Erfindung, sind Patrizen und Matrizen aus Metall hergestellt und mit Kunststoff sinterbeschichtet. Die Vorteile der Sinterbeschichtung ist, wie an sich bekannt, die mechanischen Eigenschaften zu verbessern, insbesondere die Gleitfähigkeit: die Gleitfähigkeit von mit Kunststoff sinterbeschichteten Metallen ist erhöht.

In einer besonderen Ausführungsform der Erfindung, ist eine Halterung in einem Restzahnbestand eingearbeitet und dann eine Patrize an dieser Halterung befestigt.

In einer besonderen Ausführungsform der Erfindung, sind Patrizen und Matrizen aus keramischem, insbesondere zahnfarbenem keramischem Material hergestellt und noch zusätzlich mit einer Sinterbeschichtung von Kunststoff weiterverarbeitet.

In einer besonderen Ausführungsform der Erfindung, enthalten Patrizen, oder Matrizen, oder beide, ein frikatives oder retentives Element.

Konstruktionselemente mit eingebauten frikativen oder retentiven Elementen müssen gewartet werden, das heisst, dass zum Beispiel Bolzen oder Federn, etc, bei Bedarf ausgewechselt werden können.

In einer besonderen Ausführungsform der Erfindung können Teile eines Konstruktionselementes mit speziellem Instrumentarium aus einer Prothese gelöst und wieder eingesetzt werden.

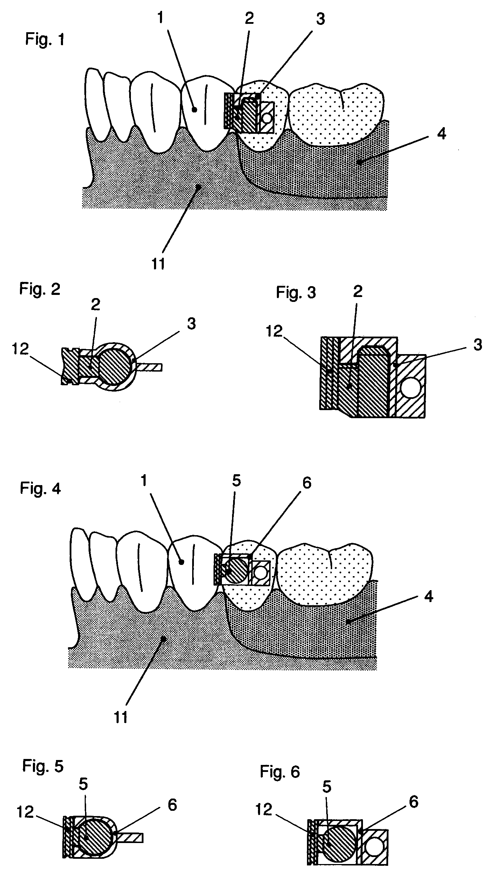

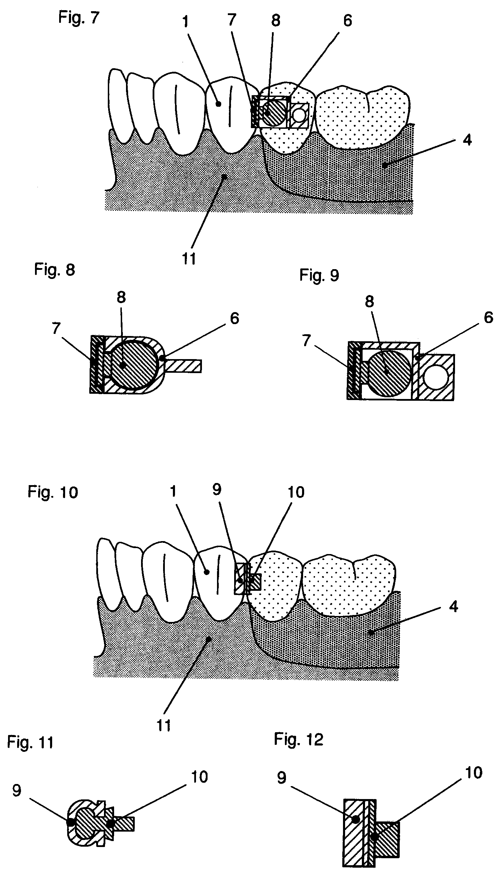

Die Erfindung wird mit Hilfe der folgenden Detailbeschreibung noch besser erklärt werden. Die dazugehörigen Figuren sind wie folgt :
◆ Figur 1 ist eine Seitenansicht eines Kiefers mit einem ersten Ausführungsbeispiel der Erfindung mit Matrize und Patrize, und Friktionszylinder ;
◆ Figur 2 ist eine Aufsicht desselben Ausführungsbeispiels ;
◆ Figur 3 ist eine Vergrösserung eines Details von Fig. 1 ;
◆ Figur 4 ist eine Seitenansicht eines Kiefers mit einem zweiten Ausführungsbeispiel der Erfindung, mit Kugel ;
◆ Figur 5 ist eine Aufsicht desselben Ausführungsbeispiels 4 ;
◆ Figur 6 ist eine Vergrösserung eines Details von Fig. 4 ;
◆ Figur 7 ist eine eine Seitenansicht eines Kiefers mit einem dritten Ausführungsbeispiel der Erfindung, mit Kugel, die zusätzlich eine Halterung für die Patrize aufweist ;
◆ Figur 8 ist eine Aufsicht desselben Ausführungsbeispiels ;
◆ Figur 9 ist eine Vergrösserung eines Details von Fig. 7 ;
◆ Figur 10 ist eine Seitenansicht eines Kiefers mit einem vierten Ausführungsbeispiel der Erfindung, das ein intrakoronales Konstruktionselement darstellt.
◆ Figur 11 ist eine Aufsicht desselben Ausführungsbeispiels ;
◆ Figur 12 ist eine Vergrösserung eines Details von Fig. 10.

Die Figuren 1, 4, 7 und 10 sind teilweise im Schnitt, und die Figuren 2, 3, 5, 6, 8, 9, 11, 12 sind im Schnitt.

Figuren 1 bis 9 zeigen Beispiele von extrakoronalen Konstruktionselementen, und Figuren 10 bis 12 zeigen ein Beispiel von einem intrakoronalen Konstruktionselement.

Figur 1 stellt die Seitenansicht eines Kiefers 11 mit einem Restzahnbestand 1 dar. Dieser Restzahnbestand 1 kann auch eine künstliche Zahkrone oder ein künstlicher Zahn sein, die in allen Fällen im Mund einzementiert oder verschraubt sind. Eine Patrize 2 ist in die Seite des Restzahnbestandes 1 in an sich bekannter Weise befestigt.

Eine Prothese 4 ist vom Benutzer herausnehmbar. Sie ist mit einer Matrize 3 bestückt, die auf die Patrize beim Herausnehmen gleitet.

In der Figur 3 sind die Patrize 2 und die Matrize 3 vergrössert, auch in Seitenansicht. Wenn die Prothese 4 eingegliedert ist, ist die Patrize 2 von der Prothese 4 verdeckt.

Die künstliche Zähnkrone 1 und die Zähne in der Prothese 4 sind aus keramischem Material hergestellt. Der Rest der Prothese ist aus Kunststoff.

Ausschlaggebend für die Wahl eines Konstruktionselementes können viele Faktoren sein. Zu diesen Faktoren gehören : Mundsituation, Zustand des Zähnfleisches, Hygiene des Kunden, Präparation des Zahnes, vorhandener Platz, Konstruktion des Zahnersatzes und Preis.

Die Figur 2 ist eine Aufsicht der Patrize 2 und der Matrize 3 in verbundener Form. Die Gleitung findet in senkrechter Richtung statt. Der Befestigungsteil der Patrize 2, der in dem Restzahnbestand 1 einzementiert ist, ist in bekannter Weise mit vertikalen Angriffsrillen 12 versehen, die zu einer besseren Befestigung dienen.

In den Figuren 4, 5 und 6 ist eine andere Ausführungsform der Patrize 5 und der Matrize 6 illustriert. Um eine grössere Beweglichkeit der Prothese zu gewähren, hat der aktive Teil der Patrize 5 die Form einer Kugel. Die Abmontierung erfolgt in senkrechter Richtung, wie mit dem ersten Beispiel.

In den Figuren 7, 8 und 9 wird ein Beispiel mit einer Halterung 7 dargestellt. Diese Halterung 7 wird in den Restzahnbestand 1 in gewohnter Art eingearbeitet. Danach wird in dieser Halterung 7 eine Patrize 8 befestigt, meistens eingeklebt. Der Vorteil der Halterung 7 mit getrennter Patrize 8 ist die Kombination einer Halterung 7 aus keramischem Material, oder einer beschichteten Halterung 7, und einer herkömmlichen Patrize 8.

Die Figuren 10, 11 und 12 zeigen ein Beispiel eines intrakoronalen Konstruktionselementes. Hier ist die intrakoronale Matrize 9 in eine Seite einer Krone 1 eingegossen. Um die Patrize 10 und die damit befestigte Prothese 4 eingliedern und herausnehmen zu können, soll aber der obere Teil dieser Seite des Restzahnbestandes 1 freigelassen werden. Die Wahl, ob ein intrakoronales oder ein extrakoronales Geschiebe verwendet werden soll, ergibt sich meist durch die vorhandene Präparation der beschliffenen Zahkrone.

Alle dargestellten Beispiele beinhalten an sich bekannte, nicht weiter beschriebene Friktionsmittel, die die unerwünschte Trennung von Patrize und Matrize verhindern..

Die Erfindung betrtifft generell alle zahnmedizinischen feinmechanischen Teile, die auch als 〈〈Geschiebe〉〉, 〈〈Gelenke〉〉, 〈〈prothetische Haltelemente oder Hilfsteile〉〉, 〈〈Scharniere〉〉 oder 〈〈Scharniergelenke〉〉 bekannt sind.

## Patentansprüche

1. Konstruktionselemente für eine Verbindung zwischen einem Restzahnbestand (1) und einer Prothese (4), dadurch gekennzeichnet, dass an sich bekannten Konstruktionselementen, Teile der Patrize (2, 5, 8, 10), bzw. Teile der Matrize (3, 6, 9), oder einer Halterung (7) für eine Patrize, mit keramischem Material hergestellt oder beschichtet sind.

2. Konstruktionselemente gemäss Anspruch 1, dadurch gekennzeichnet, dass die gesamten Patrizen (2, 5, 8, 10), Matrizen (3, 6, 9) und Halterungen (7), mit keramischem Material beschichtet sind.

3. Konstruktionselemente gemäss Anspruch 1, dadurch gekennzeichnet, dass Patrizen (2, 5, 8, 10), Matrizen (3, 6, 9) und Halterungen (7) aus einem zahnfarbenem keramischen Material hergestellt sind.

4. Konstruktionselemente gemäss Anspruch 3, dadurch gekennzeichnet, dass das keramische Material beschichtet ist.

5. Konstruktionselemente gemäss Anspruch 1 und 3, dadurch gekennzeichnet, dass Patrizen (2, 5, 8, 10) und Matrizen (3, 6, 9) aus zahnfarbenem keramischen Material hergestellt und mit Kunststoffsinterbeschichtet sind.

6. Konstruktionselemente gemäss Anspruch 1, dadurch gekennzeichnet, dass eine Halterung (7) in einem Restzahnbestand eingearbeitet werden kann und eine Patrize (8) in dieser Halterung (7) befestigt werden kann.

7. Konstruktionselemente gemäss Anspruch 1, 3 und 4, dadruch gekennzeichnet, dass Patrizen und / oder Matrizen ein frikatives oder retentives Element enthalten.

8. Konstruktionselemente gemäss Anspruch 1, 3 und 4, dadurch gekennzeichnet, dass Teile eines Konstruktionselementes mit speziellem Instrumentarium aus einer Prothese (4) gelöst und wieder eingesetzt werden können.
